# EUROPÄISCHE PATENTANMELDUNG

(11) **EP 0 950 882 A1**
(43) Veröffentlichungstag der Anmeldung: **20.10.1999**
(21) Anmeldenummer: 99106703.4
(22) Anmeldetag: 01.04.1999
(51) Int. Cl.: G01K 7/38

(54) **Verfahren zur räumlich aufgelösten Temperaturüberwachung, Suspension von ferromagnetischen Mikropartikeln und Verwendung dieser Suspension**

(30) Priorität: 16.04.1998 DE 19816917
(71) Anmelder: SIEMENS AKTIENGESELLSCHAFT, 80333 München (DE)
(72) Erfinder: Löffler, Ralf, 81377 München (DE)

(57) **Zusammenfassung**

Zur Temperaturüberwachung wird einem Körper (1) eine ferromagnetische Substanz (2) zugeführt, deren Curie-Temperatur einem gewünschten Temperaturgrenzwert entspricht. Mittels einer MR-Messung wird eine räumlich aufgelöste Darstellung des Körpers (1) gewonnen, wobei Artefakte, die im ferromagnetischen Zustand der Substanz verursacht werden, als Kriterium dafür herangezogen werden, daß der Temperaturgrenzwert noch nicht erreicht ist.

## Beschreibung

In der Medizin gibt es die Anforderung, ortsaufgelöst die Temperatur in einem lebenden Organismus möglichst genau zu erfassen. Dies gilt z.B. für Anwendungen der Hyperthermie. Behandlungen mit Hyperthermie werden beispielsweise mit LITT (Laser Induced Thermotherapy) oder mit regionaler Tiefenhyperthermie durchgeführt, wobei bei letzterem Verfahren tief im Körper liegende Tumore mit Hochfrequenzstrahlung behandelt werden.

Insbesondere bei der Hyperthermie muß die Temperaturmessung hochgenau sein. Zum einen muß sichergestellt werden, daß das Tumorgewebe genügend stark erhitzt wird, damit die Behandlung wirksam ist. Zum anderen müssen Verbrennungen des Patienten ausgeschlossen werden. Die Temperatur in dem behandelten Bereich muß daher in engen Grenzen gehalten werden und liegt z.B. für die Hyperthermie um 42,5°C. Diese Temperatur ist bei allen Experimenten gleich, so daß eine Temperaturerfassung nur in diesem Bereich exakt sein muß.

Mit gängigen Verfahren kann die Temperatur im Körper nur an einzelnen Punkten oder längs eines Hohlkatheters bestimmt werden. Dies ist jedoch unbefriedigend, da eine Einhaltung der gewünschten Temperatur über den gesamten Behandlungsbereich damit nicht sichergestellt werden kann.

Es sind Anwendungen der MR-Bildgebung bekannt, um ortsaufgelöst die Temperatur im Inneren eines Körpers zu ermitteln. Soweit diese Verfahren auf der Protonen-Kernspinresonanz beruhen, wurden folgende Parameter als relevant für die Gewebetemperatur herangezogen: Chemische Verschiebung des Wasser-Peaks, die T1-Relaxationszeit der Protonen, die Gesamt-Magnetisierung des Wassers und der Diffusionskoeffizient von Wasserprotonen im Gewebe. Damit ist eine nichtinvasive und ortsaufgelöste Überwachung der Körpertemperatur auch an oberflächenfernen Stellen möglich. Größere Bereiche des Körpers können gleichzeitig überwacht werden. Allerdings sind derartige Verfahren für den obengenannten Einsatzzweck nicht genau genug und vielfach auch zu empfindlich gegen äußere Störungen.

Von K. J. Franklin et al. wurde in dem Artikel "Encapsulated liquid crystals as probes for remote thermometry", International Journal Hyperthermia, Vol. 8(2), pp. 253-262 (1992) und von A. G. Webb et al. in dem Artikel "Sonochemically produced fluorocarbon microspheres: A new class of magnetic resonance imaging agent", Journal of Magnetic Resonance, 6, pp. 675-683 (1996), vorgeschlagen, den Phasenübergang von Kristallen zur Temperaturermittlung mittels magnetischer Resonanz heranzuziehen. Es wurde festgestellt, daß bestimmte Substanzen in der festen Phase eine deutlich geringere Intensität des MR-Signals aufweisen als in der Flüssigphase. In der letztgenannten Literaturstelle wurde eine Fluorcarbon-Hydrocarbon-Mischung vorgeschlagen, die bei einer vorgegebenen Temperatur vom festen Zustand in den flüssigen Zustand übergeht. Wenn man diese Mischung in einen Körper einbringt, kann durch Unterschiede in der Signalintensität des zugeordneten MR-Signals festgestellt werden, ob die vorgegebene Temperatur über- oder unterschritten ist. In der erstgenannten Literaturstelle wurden für einen ähnlichen Effekt Flüssigkristalle vorgeschlagen. Um zu verhindern, daß die angewandten Substanzen vom Körper aufgenommen werden und dort toxisch wirken, ist vorgesehen, diese in eine nichttoxische Hülle einzuschließen, die im Körper nicht aufgelöst wird.

Den obengenannten Verfahren zur Temperaturüberwachung mittels MR aufgrund von Änderungen der Signalintensität beim Phasenübergang ist gemeinsam, daß eine Kernresonanzmessung bezüglich dieser Substanz, z.B. Fluor, durchgeführt werden muß. Während dies bei MR-Spektrometern kein Problem darstellt, sind bildgebende MR-Geräte praktisch nur für die Protonenresonanz verfügbar. Außerdem liegt z.B. Fluor im Körper nur mit sehr geringer Konzentration vor, so daß das Körpergewebe allenfalls mit einem äußerst niedrigen Signal-Rausch-Verhältnis abgebildet werden kann. Zur Lokalisierung der Temperaturüberwachung im Gewebe ist eine Abbildung des Körpergewebes jedoch unumgänglich. Wenn überhaupt, könnten die vorgeschlagenen Verfahren nur mit speziell dafür gebauten Geräten durchgeführt werden, so daß diese zumindest derzeit nur von akademischem Interesse sind.

Aufgabe der Erfindung ist es daher, ein Verfahren anzugeben, mit dem eine genaue und zuverlässige lokalicierte Temperaturüberwachung möglich ist. Diese Aufgabe wird erfindungsgemäß gelöst durch die Merkmale des Anspruchs 1.

Wenn man die MR-Messung auf Protonen bezieht, können herkömmliche MR-Bildgebungsgeräte, die durchwegs mittels der Kernspinresonanz von Protonen arbeiten, eingesetzt werden. Der ferromagnetische Stoff kann z.B. in Form von implantierbaren Strukturen oder in Form einer injizierbaren Suspension aus eingehüllten ferromagnetischen Mikropartikeln angewandt werden.

Des weiteren besteht eine Aufgabe der Erfindung darin, ein Kontrastmittel anzugeben, das für die Temperaturüberwachung mittels des Effekts der magnetischen Resonanz geeignet ist sowie in der Verwendung einer solchen Substanz. Diese Aufgaben werden mit einer Suspension nach Anspruch 9 bzw. einer Verwendung nach Anspruch 12 gelöst.

Ein Ausführungsbeispiel der Erfindung wird nachfolgend anhand der Figuren 1 bis 4 näher erläutert. Dabei zeigen:
- Figur 1: die Plazierung von ferromagnetischen Nadeln im Untersuchungsobjekt,
- Figur 2: das erhaltene MR-Bild
- Figuren 3 und 4: den Suszeptibilitätsverlauf von zwei Palladium-Nickel-Legierungen.

Bei der Erfindung wird die Tatsache ausgenutzt, daß ferromagnetische Stoffe in MR-Bildern starke Störungen, sogenannte Artefakte, verursachen. Art und Ausmaß der Störungen hängen sehr stark von der verwendeten Bildgebungssequenz ab. Beispielsweise sind Spinechosequenzen typischerweise wesentlich unempfindlicher gegen Magnetfeldstörungen als Gradientenechosequenzen, beispielsweise die sogenannte FLASH-Sequenz, wie sie in der US-Patentschrift 4,707,658 beschrieben ist.

Wenn man einen ferromagnetischen Stoff in das Untersuchungsgebiet einbringt, so wird bei bestimmten Sequenzen das Kernresonanzsignal aus der Umgebung dieses Stoffes durch Dephasierung völlig ausgelöscht, d.h. im MR-Bild dunkel abgebildet. Paramagnetische Stoffe hingegen beeinflussen das Kernresonanzsignal in der Umgebung kaum, d.h., sie erzeugen fast keine Artefakte.

Für die Erfindung ist ein weiterer physikalischer Effekt maßgeblich, nämlich die Tatsache, daß ferromagnetische Stoffe ihre ferromagnetische Eigenschaft nur bis zu einer bestimmten Temperatur, nämlich der Curie-Temperatur behalten. Über dieser Temperatur sind die Stoffe dann paramagnetisch. Es sind Stoffe bekannt, die bereits bei Temperaturen im Bereich der Körpertemperatur vom ferromagnetischen Zustand in den paramagnetischen Zustand übergehen. Die Curie-Temperatur dieser Stoffe kann sehr genau eingestellt werden, ferner werden solche Stoffe bereits in der Medizin eingesetzt, d.h., die Anwendung am Menschen ist unbedenklich.

Die beiden obengenannten physikalischen Effekte werden nun zur Temperaturuberwachung wie folgt verwendet: Wenn man eine kleine Menge einer ferromagnetischen Substanz mit bekannter Curie-Temperatur in den zu untersuchenden Körper einbringt, so führen unterhalb der Curie-Temperatur die starken Feldverzerrungen zu deutlich sichtbaren Signalauslöschungen in der Umgebung der Substanz. Steigt die Temperatur im Bereich dieser Substanz über die Curie-Temperatur, so findet keine Auslöschung mehr statt, so daß man Gebiete mit einer über der Curie-Temperatur liegenden Temperatur leicht identifizieren kann.

Wesentlich ist hierbei, daß im Gegensatz zu bekannten Verfahren der Temperaturüberwachung mit in den Körper eingebrachten Substanzen nicht Kernresonanzsignale aus diesen Substanzen selbst erfaßt werden, sondern die Kernresonanzsignale aus dem umliegenden Gewebe. Dabei kann ein herkömmliches Kernspintomographiegerät verwendet werden, das typischerweise mit der Kernresonanz von Protonen arbeitet. Durch diese indirekte Art der Messung erzielt man mehrere Vorteile:
- Da - je nach angewandter Pulssequenz - eine Kontraständerung in einem mehr oder weniger großen Bereich um die eingebrachte Substanz erfolgt, können schon geringe Mengen von Kontrastmittel zu einer deutlichen Kontraständerung führen. Der nachgewiesene Effekt ist nicht eine Kontraständerung der eingebrachten Substanz per se, sondern die Einwirkung desselben auf die Umgebung. Bei den eingangs beschriebenen Methoden zur Temperaturüberwachung müssen große Substanzmengen in den Körper eingebracht werden, um einen Effekt nachzuweisen. Kontrasterzeugung durch Einwirkung auf die Umgebung wird schon bei statischen Kontrastmitteln in Form von ferromagnetischen Mikropartikeln in der MR-Tomographie verwendet. Bei diesen statischen Kontrastmitteln nutzt man allerdings keine Übergänge vom ferromagnetischen in den paramagnetischen Zustand aus, da die Curie-Temperatur solcher Kontrastmittel weit über dem Bereich von Körpertemperaturen liegt.
- Da die Bilderzeugung auf den Kernresonanzsignalen von Protonen beruht, kann man herkömmliche Kernspintomographiegeräte anwenden.
- Da die Bildgebung auf den im Körper am häufigsten vorhandenen Protonen beruht, erhält man ein gutes Signal-Rausch-Verhältnis, so daß man ein MR-Bild mit der bekannt guten Ortsauflösung verwenden kann.
- Wie bereits ausgeführt, sind Pulssequenzen unterschiedlich empfindlich auf Magnetfeldstörungen. Gerade besonders schnelle Pulssequenzen zeigen eine hohe Artefaktanfälligkeit gegen Magnetfeldstörungen. Im vorliegenden Fall sind solche Artefakte aber gerade gewünscht, so daß man sehr schnelle Pulssequenzen einsetzen kann. Damit ist z.B. eine dreidimensionale Temperaturerfassung möglich.

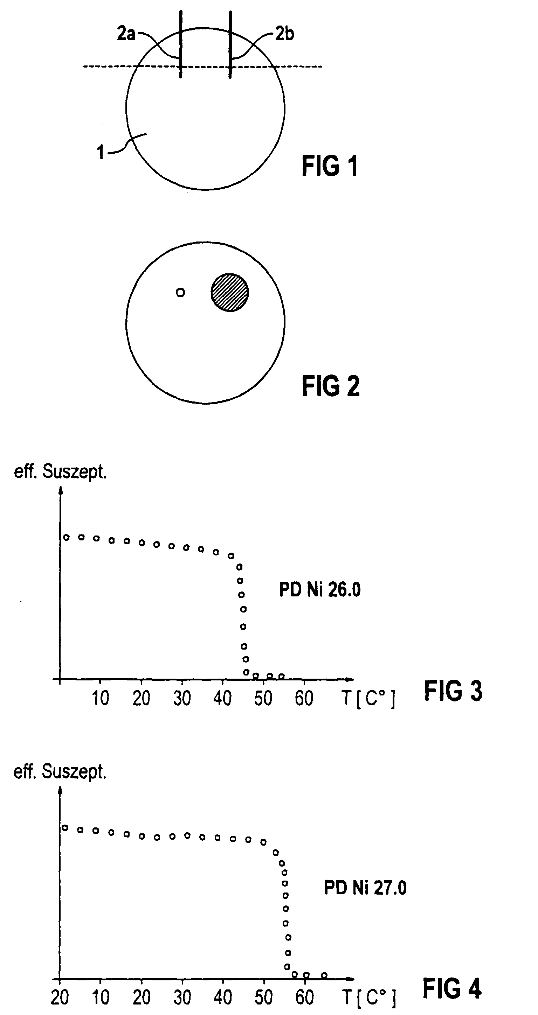

Die Substanz mit der gewünschten Curie-Temperatur kann z.B. in Form von kleinen Nadeln in das Zielvolumen implantiert werden. Dies ist schematisch in Figur 1 dargestellt, wo zwei Nadeln 2a und 2b in das Untersuchungsobjekt 1 eingebracht sind. Figur 2 zeigt schematisch ein MR-Bild in einer Schnittfläche gemäß der gestrichelten Linie in Figur.

Im dargestellten Fall ist die Curie-Temperatur im Bereich der Nadel 2a überschritten, während die Temperatur im Bereich der Nadel 2b unter der Curie-Temperatur liegt. Damit findet im Bereich der Nadel 2b eine Signalauslöschung statt, was im Bereich der Nadel 2a nicht der Fall ist. Anstelle implantierbarer Strukturen kann man auch eine Suspension von ferromagnetischen Mikropartikeln anwenden, ähnlich wie magnetische Flüssigkeiten, die auch als konventionelles MR-Kontrastmittel eingesetzt werden. Damit kann man sehr leicht auch kleinste Regionen identifizieren, in denen die Zieltemperatur überschritten wird. Wie bei Kontrastmitteln üblich, werden dabei die Partikel in Hüllen eingebettet, die die Suspension körperverträglich machen.

Ein ferromagnetischer Stoff mit der geeigneten Curie-Temperatur im Bereich von Körpertemperaturen ist beispielsweise eine Palladium-Nickel-Legierung. Figuren 3 und 4 zeigen beispielhaft den Suszeptibilitätsverlauf einer solchen Legierung in Abhängigkeit von der Temperatur bei einem atomaren Nickelgehalt von 26 bzw. 27 %. Wie man sieht, kann man durch den Nickelgehalt die gewünschte Curie-Temperatur recht gut einstellen und somit an die gewünschte Überwachungstemperatur anpassen. Der Suszeptibilitätsverlauf der Palladium-Nickel-Legierung ebenso wie deren klinische Anwendung in Form von Nadeln für Hyperthermiebehandlung ist aus der Dissertationsschrift von Niek van Wieringen, Universität Amsterdam, vom 26.06.97 bekannt. Dabei wird die Palladium-Nickel-Legierung verwendet, um eine "selbstabschaltende Heizung" im Tumorgewebe zu erzielen. Palladium-Nickel-Nadeln werden im Tumorgewebe induktiv mittels Hochfrequenz geheizt, solange sie ferromagnetisch sind. Sobald die Curie-Temperatur der Nadeln überschritten wird, werden diese unmagnetisch und heizen nicht mehr. Im allgemeinen wird die Curie-Temperatur dieser Nadeln auf etwa 55°C eingestellt.

Mit einem ferromagnetischen Stoff mit geeigneter Curie-Temperatur ist es unter Anwendung herkömmlicher MR-Tomographiegeräte möglich, eine Temperaturüberwachung durchzuführen. Diese Überwachung ist zuverlässig und genau, da der Übergang vom ferromagnetischen in den paramagnetischen Zustand genau definiert und im Bild deutlich sichtbar ist. Aufgrund der MR-Messung ist eine exzellente Ortsauflösung gegeben und eine Temperaturüberwachung auch tief im Körper möglich. Das Verfahren eignet sich somit gut für die Temperaturüberwachung bei Hyperthermie-Behandlung.

## Patentansprüche

1. Verfahren zur räumlich aufgelösten Temperaturüberwachung in einem Körper (1), dem eine ferromagnetische Substanz (2) zugeführt wird, deren Curie-Temperatur einem gewünschten Temperaturgrenzwert entspricht, wobei mittels einer MR-Messung eine räumlich aufgelöste Darstellung des Körpers (1) gewonnen wird und wobei Artefakte, die im ferromagnetischen Zustand der Substanz verursacht werden, als Kriterium dafür herangezogen werden, daß der Temperaturgrenzwert noch nicht erreicht ist.

2. Verfahren nach Anspruch 1, wobei sich die MR-Messung auf Protonen bezieht.

3. Verfahren nach Anspruch 1 oder 2, wobei für die MR-Messung eine Pulssequenz verwendet wird, deren Bildkontrast sensitiv auf Suszeptibilitätsänderungen reagiert.

4. Verfahren nach einem der Ansprüche 1 bis 3, wobei als ferromagnetischer Stoff eine Palladium-Nickel-Legierung verwendet wird.

5. Verfahren nach Anspruch 4, wobei eine Legierung mit einem atomaren Nickel-Anteil im Bereich von 26 % verwendet wird.

6. Verfahren nach einem der Ansprüche 1 bis 5, wobei der ferromagnetische Stoff in Form von implantierbaren Strukturen angewandt wird.

7. Verfahren nach Anspruch 6, wobei der ferromagnetische Stoff in Form einer Nadel angewandt wird.

8. Verfahren nach einem der Ansprüche 1 bis 5, wobei der ferromagnetische Stoff in Form einer injizierbaren Suspension aus eingehüllten ferromagnetischen Mikropartikeln angewandt wird.

9. Suspension von ferromagnetischen Mikropartikeln, wobei die Mikropartikel eine Curie-Temperatur aufweisen, die im Bereich von unterkühlten bis überhöhten Körpertemperaturen liegt und wobei die Mikropartikel so eingehüllt sind, daß sie für einen lebenden Organismus unschädlich sind.

10. Suspension nach Anspruch 9, wobei die ferromagnetischen Mikropartikel aus einer Palladium-Nickel-Legierung bestehen.

11. Suspension nach Anspruch 10, wobei die Legierung einen atomaren Nickelanteil im Bereich von 26 % aufweist.

12. Verwendung einer Suspension nach Anspruch 9 als MR-Kontrastmittel zur Temperaturüberwachung in einem Körper.

13. Verwendung von ferromagnetischen Strukturen, deren Curie-Temperatur im Bereich von unterkühlten bis überhöhten Körpertemperaturen liegt zur Implantation in einen Körper zur Temperaturüberwachung mittels ortsaufgelöster MR-Untersuchungen.
